# EUROPEAN PATENT APPLICATION

(11) **EP 4 773 077 A1**
(43) Date of publication of application: **08.07.2026**
(21) Application number: 24906040.1
(22) Date of filing: 29.11.2024
(51) Int. Cl.: G06T 7/00, G01N 21/88, G06T 7/20

(54) **ADDITIVE MANUFACTURING QUALITY INSPECTION METHOD AND RELATED APPARATUS**

(30) Priority: 19.12.2023 CN 202311761269
(71) Applicant: Guangzhou Diligine Photonics Co., Ltd., Guangzhou, Guangdong 510000 (CN)
(72) Inventor: WANG, Minglang, Guangzhou, Guangdong 510000 (CN); YUAN, Peng, Guangzhou, Guangdong 510000 (CN); WANG, Lin, Guangzhou, Guangdong 510000 (CN); BAI, Tianxiang, Guangzhou, Guangdong 510000 (CN); YOU, Deyong, Guangzhou, Guangdong 510000 (CN)
(74) Representative: Petraz, Gilberto Luigi
(86) International application number: PCT/CN2024/135543
(87) International publication number: WO 2025/130555

(57) **Abstract**

The present disclosure discloses an additive manufacturing quality inspection method and related apparatus. The method includes the following. An industrial PC (IPC) acquires a first electrical signal corresponding to a laser emission signal, a second electrical signal corresponding to a laser reflection signal, a third electrical signal corresponding to a visible light signal, and a fourth electrical signal corresponding to an infrared light signal during a first period in a laser additive manufacturing process. The IPC determines a layer electrical-signal amplitude corresponding to at least one of the laser emission signal, the laser reflection signal, the visible light signal, or the infrared light signal based on at least one of the first electrical signal, the second electrical signal, the third electrical signal, or the fourth electrical signal during the first period; and determines whether a target slice layer has a defect based on at least one of the layer electrical-signal amplitude corresponding to the laser emission signal, the layer electrical-signal amplitude corresponding to the laser reflection signal, the layer electrical-signal amplitude corresponding to the visible light signal, or the layer electrical-signal amplitude corresponding to the infrared light signal. This facilitates detecting the abnormal region in the slice layer of the part during additive processing.

## Description

This application claims priority to Chinese Patent Application No. 202311761269.7, filed with the China National Intellectual Property Administration on December 19, 2023, entitled "Additive Manufacturing Quality Inspection Method and Related Apparatus", the entire disclosure of which is incorporated herein by reference.

### TECHNICAL FIELD

This disclosure relates to the field of additive manufacturing technology, and in particular, to an additive manufacturing quality inspection method and a related apparatus.

### BACKGROUND

Additive manufacturing, also known as 3D printing manufacturing, mainly involves melting metal raw materials by focusing thermal energy from a laser, and then processing materials such as powder layer by layer to form a desired workpiece. Laser additive manufacturing is a metal additive manufacturing process. Compared with processing methods such as parts assembly and metal cutting in traditional industries, laser additive manufacturing offers higher efficiency and greater flexibility. It can be used for rapid prototyping, manufacturing functionally graded materials, and repairing high-value-added components, etc. Currently, this technology is increasingly applied in the aerospace, defense, automotive, and biomedical industries. During the laser additive manufacturing process, factors such as different laser processing parameters, environment, and equipment can lead to poor surface accuracy of the formed workpiece. The generation of defects and dimensional accuracy have consistently hindered the further popularization and application of this technology. Therefore, research on online monitoring technology for the additive manufacturing process is a necessary means and quality assurance for controlling the overall additive manufacturing process.

Existing online detection methods for laser additive processing generally include the following two types: offline detection and online detection.

In offline detection methods, surface detection equipment such as microscopes and scanning electron microscopes are mainly used to complete surface inspection, making it difficult to detect internal defects of the component. Destructive measurement methods like industrial metallographic sectioning damage the original morphology of the component and have low efficiency. Methods such as industrial CT scanning and ultrasonic testing can obtain internal information of the workpiece for defect detection, but such methods can only be performed after the part is manufactured, constituting offline detection, and being unable to achieve online detection, which makes it difficult to integrate manufacturing and inspection, thus affecting production efficiency.

In online detection methods, for example, the existing Chinese patent (CN115861187A) for laser additive manufacturing, through a schematic diagram of the online monitoring system for laser deposition additive manufacturing of that application, uses methods such as photography, scanning, and infrared sensing to melt and deposit powder or wire materials in combination with a digital model. Three types of data: molten pool image data, molten pool temperature data, and three-dimensional point cloud data are used for matching. Specifically, high-speed cameras, infrared cameras, laser three-dimensional scanners, etc., are used to obtain online detection information. For example, a high-speed camera is used to collect molten pool image data; an infrared camera is used to collect molten pool temperature data; a laser three-dimensional scanner is used to collect three-dimensional point cloud data of the workpiece shape.

Offline detection methods not only damage the workpiece structure but also easily cause deformation of the workpiece due to destructive detecting, affecting the final measurement results. Online detection methods are costly.

### SUMMARY

The present disclosure proposes an additive manufacturing quality inspection method and a related apparatus, which facilitate the detection of abnormal regions in a slice layer of a part during the additive processing.

The present disclosure adopts the following technical solutions.

In a first aspect, an embodiment of the present disclosure provides an additive manufacturing quality inspection method g. The method includes the following. An industrial PC (IPC) acquires electrical signals corresponding to optical signals during a first period in a laser additive manufacturing process, wherein the first period is a period during which a target slice layer of a target part is processed in the laser additive manufacturing process, the optical signals include a laser emission signal from a laser device during the first period, and a laser reflection signal, a visible light signal, and an infrared light signal generated from the target slice layer during the first period. The electrical signals corresponding to the optical signals include one or more of: a first electrical signal corresponding to the laser emission signal, a second electrical signal corresponding to the laser reflection signal, a third electrical signal corresponding to the visible light signal, or a fourth electrical signal corresponding to the infrared light signal. The IPC determines that the target slice layer has a defect when one or more of the following conditions are met. The conditions include:
a layer electrical-signal amplitude corresponding to the laser emission signal exceeds a first threshold range; a layer electrical-signal amplitude corresponding to the laser reflection signal exceeds a second threshold range; a layer electrical-signal amplitude corresponding to the visible light signal exceeds a third threshold range; and a layer electrical-signal amplitude corresponding to the infrared light signal exceeds a fourth threshold range. The layer electrical-signal amplitude corresponding to the laser emission signal is determined based on the first electrical signal during the first period, the layer electrical-signal amplitude corresponding to the laser reflection signal is determined based on the second electrical signal during the first period, the layer electrical-signal amplitude corresponding to the visible light signal is determined based on the third electrical signal during the first period, and the layer electrical-signal amplitude corresponding to the infrared light signal is determined based on the fourth electrical signal during the first period.

During the process of processing the target slice layer of the target part, the electrical signal corresponding to the laser emission signal, the electrical signal corresponding to the laser reflection signal, the electrical signal corresponding to the visible light signal, and the electrical signal corresponding to the infrared light signal are acquire. Based on the acquired electrical signal corresponding to the laser emission signal, the electrical signal corresponding to the laser reflection signal, the electrical signal corresponding to the visible light signal, and the electrical signal corresponding to the infrared light signal, it is determined whether the target slice layer has a defect. By performing this method, abnormal regions in slice layers of the part can be detected during additive processing, and compared to the prior art, this method does not damage the part and has low cost.

In combination with the first aspect, in a possible implementation, the method of this embodiment further includes the following. The IPC acquires multiple layer electrical-signal amplitudes corresponding to multiple laser emission signals respectively corresponding to multiple reference slice layers, wherein the reference slice layers are slice layers without defects, and processing parameters of the reference slice layers are the same as processing parameters of the target slice layer. The IPC determines the first threshold range based on the multiple layer electrical-signal amplitudes corresponding to the multiple laser emission signals, wherein the upper limit and the lower limit of the first threshold range are respectively the maximum value and the minimum value among the multiple layer electrical-signal amplitudes corresponding to the multiple laser emission signals.

In combination with the first aspect, in a possible implementation, the method of this embodiment further includes the following. The IPC acquires multiple layer electrical-signal amplitudes corresponding to multiple laser reflection signals respectively corresponding to multiple reference slice layers, wherein the reference slice layers are slice layers without defects, and processing parameters of the reference slice layers are the same as processing parameters of the target slice layer. The IPC determines the second threshold range based on the multiple layer electrical-signal amplitudes corresponding to the multiple laser reflection signals, wherein the upper limit and the lower limit of the second threshold range are respectively the maximum value and the minimum value among the multiple layer electrical-signal amplitudes corresponding to the multiple laser reflection signals.

In combination with the first aspect, in a possible implementation, the method of this embodiment further includes the following. The IPC acquires multiple layer electrical-signal amplitudes corresponding to multiple visible light signals respectively corresponding to multiple reference slice layers, wherein the reference slice layers are slice layers without defects, and processing parameters of the reference slice layers are the same as processing parameters of the target slice layer. The IPC determines the third threshold range based on the multiple layer electrical-signal amplitudes corresponding to the multiple visible light signals, wherein the upper limit and the lower limit of the third threshold range are respectively the maximum value and the minimum value among the multiple layer electrical-signal amplitudes corresponding to the multiple visible light signals.

In combination with the first aspect, in a possible implementation, the method of this embodiment further includes the following. The IPC acquires multiple layer electrical-signal amplitudes corresponding to multiple infrared light signals respectively corresponding to multiple reference slice layers, wherein the reference slice layers are slice layers without defects, and processing parameters of the reference slice layers are the same as processing parameters of the target slice layer. The IPC determines the fourth threshold range based on the multiple layer electrical-signal amplitudes corresponding to the multiple infrared light signals, wherein the upper limit and the lower limit of the fourth threshold range are respectively the maximum value and the minimum value among the multiple layer electrical-signal amplitudes corresponding to the multiple infrared light signals.

In combination with the first aspect, in a possible implementation, the method of this embodiment further includes the following. When the IPC determines that the target slice layer has a defect, the IPC constructs a trajectory amplitude map corresponding to the target slice layer based on a target electrical signal during the first period. The trajectory amplitude map has a contour identical to the contour of the target slice layer. The trajectory amplitude map includes multiple trajectory amplitude lines. The multiple trajectory amplitude lines correspond to processing trajectories during processing of the target slice layer. The amplitude represented by the trajectory amplitude line is the amplitude of the target electrical signal during the processing of the target slice layer. The IPC partitions the trajectory amplitude map into multiple image blocks. The IPC determines an average electrical-signal amplitude corresponding to each image block of the multiple image blocks. The IPC obtains a first ratio for each image block based on the average electrical-signal amplitude corresponding to each image block and the layer electrical-signal amplitude corresponding to the target electrical signal. The first ratio for each image block is the ratio of the electrical signal amplitude corresponding to the image block to the layer electrical-signal amplitude corresponding to the target electrical signal. The IPC determines an abnormal region in the target slice layer according to the first ratio for each image block.

Herein, the abnormal region in the target slice layer is a region corresponding to an image block, among the multiple image blocks, for which the first ratio exceeds a ratio threshold range corresponding to the target electrical signal. The target electrical signal is any one of: the first electrical signal during the first period, the second electrical signal during the first period, the third electrical signal during the first period, or the fourth electrical signal during the first period.

By partitioning the constructed trajectory amplitude map into blocks, and based on the average electrical-signal amplitude of the image blocks obtained from partitioning, the region with defects in the target slice layer, i.e., the abnormal region, is determined. This method further determines the region where the defect exists in the target slice layer, facilitating subsequent re-processing of the defective region to eliminate the defect.

In combination with the first aspect, in a possible implementation, the method of this embodiment further includes the following. The IPC acquires position information of the abnormal region in the target slice layer. The IPC transmits the position information of the abnormal region in the target slice layer to a laser processing system, to enable the laser processing system to re-process the abnormal region in the target slice layer based on the position information of the abnormal region in the target slice layer.

In combination with the first aspect, in a possible implementation, the above-mentioned layer electrical-signal amplitude is an average layer electrical-signal amplitude, and the electrical signal amplitude corresponding to each image block is an average electrical-signal amplitude of each image block. Alternatively, the above-mentioned layer electrical-signal amplitude is determined by weighted summation of the electrical signal amplitudes of all points in the layer, and the electrical signal amplitude corresponding to each image block is determined by weighted summation of the electrical signal amplitudes of all points in each image block.

In combination with the first aspect, in a possible implementation, the method of this embodiment further includes the following. The IPC displays at least one of: a curve of the first electrical signal during the first period, a curve of the second electrical signal during the first period, a curve of the third electrical signal during the first period, or a curve of the fourth electrical signal during the first period, and displays a result of whether the target slice layer has a defect.

By displaying the above curves and the defect detection result, it is convenient for the processing personnel to know whether there is a defect in the target slice layer and the variation of each electrical signal curve.

In combination with the first aspect, in a possible implementation, the method of this embodiment further includes: displaying the trajectory amplitude map corresponding to the target slice layer; and displaying the abnormal region in the target slice layer on the trajectory amplitude map corresponding to the target slice layer. In this way, it is convenient for the processing personnel to know which specific region in the target slice layer has a defect, facilitating subsequent re-processing.

In a second aspect, an embodiment of the present disclosure provides an IPC, including an acquiring unit, a display unit, a determining unit, a constructing unit, a partitioning unit, and a transmitting unit. The acquiring unit, display unit, determining unit, constructing unit, partitioning unit, and transmitting unit are configured to implement the method provided in any implementation of the first aspect.

In a third aspect, an embodiment of the present disclosure provides an IPC, including a processor, wherein the processor is coupled to a memory, the memory is configured to store a computer program, and the processor is configured to execute the computer program stored in the memory to cause the IPC to perform the method provided in any implementation of the first aspect.

In a fourth aspect, an embodiment of the present disclosure provides a laser processing control system, including a laser welding system, a sensor module, a signal processor, and an IPC, wherein the IPC is configured to perform the method provided in any implementation of the first aspect.

In a fifth aspect, an embodiment of the present disclosure provides a computer-readable storage medium, the computer-readable storage medium storing a computer program, the computer program causing a computer to perform the method provided in any implementation of the first aspect.

In a sixth aspect, an embodiment of the present disclosure provides a computer program product, the computer program product including a non-transitory computer-readable storage medium storing a computer program, the computer being operable to cause a computer to perform the method according to the first aspect or the second aspect.

It can be understood that the IPCs provided in the second and third aspects, the laser processing control system provided in the fourth aspect, the computer storage medium provided in the fifth aspect, or the computer program product provided in the sixth aspect are all used to implement the method provided in any one implementation of the first aspect. Therefore, the beneficial effects achievable thereby can refer to the beneficial effects in the corresponding method, and will not be repeated herein.

### BRIEF DESCRIPTION OF THE DRAWINGS

To explain the technical solutions in the embodiments of the present disclosure or the prior art more clearly, the following briefly introduces the drawings required for describing the embodiments of the present disclosure. Apparently, the drawings in the following description are only some embodiments of the present disclosure. For those of ordinary skill in the art, other drawings can be obtained based on these drawings without creative efforts.
FIG. 1 is a schematic structural diagram of an online detection system for laser additive manufacturing according to an embodiment of the present disclosure.
FIG. 2 is a schematic flowchart of an additive manufacturing quality inspection method according to an embodiment of the present disclosure.
FIG. 3 is a schematic diagram illustrating the relationship between processing trajectories and electrical signal according to an embodiment of the present disclosure.
FIG. 4 is a schematic diagram of a trajectory amplitude map according to an embodiment of the present disclosure.
FIG. 5 is a schematic diagram of an electrical signal according to an embodiment of the present disclosure.
FIG. 6 is a schematic structural diagram of an industrial PC (IPC) according to an embodiment of the present disclosure.
FIG. 7 is a schematic structural diagram of another IPC according to an embodiment of the present disclosure.

### DETAILED DESCRIPTION

The technical solutions in the embodiments of the present disclosure will be clearly and completely described below in conjunction with the drawings in the embodiments of the present disclosure. Obviously, the described embodiments are only a part of the embodiments of the present disclosure, not all of the embodiments. Based on the embodiments of the present disclosure, all other embodiments obtained by those of ordinary skill in the art without creative effort fall within the protection scope of the present disclosure.

The terms used in the embodiments of the present disclosure are only for the purpose of describing specific embodiments and are not intended to limit the present disclosure. The singular forms "a," "said," and "the" used in the embodiments of the present disclosure, the description of the drawings, and the claims are also intended to include plural forms, unless the context clearly indicates otherwise. It should be understood that the term "and/or" used herein is merely a description of the association relationship of associated objects, indicating that there may be three relationships, for example, A and/or B may indicate: A alone, A and B simultaneously, and B alone. In addition, the character "/" herein generally indicates that the associated objects before and after are in an "or" relationship. It should be understood that although the terms "first," "second," etc., may be used in the embodiments of the present disclosure, they do not indicate any order, quantity, or importance, but are only used to distinguish different components. Similarly, words such as "one" or "an" do not indicate a quantity limit, but indicate that there is at least one. "Multiple" involved in the embodiments of the present disclosure means greater than or equal to two.

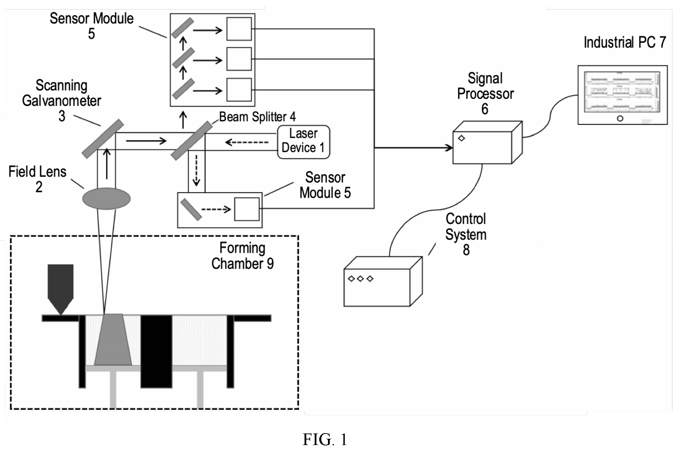

Referring to FIG. 1, FIG. 1 is a schematic structural diagram of an online detection system for laser additive manufacturing according to an embodiment of the present disclosure. As shown in FIG. 1, the system includes a laser device 1, a field lens 2, a scanning galvanometer 3, a beam splitter 4, a sensor module 5, a signal processor 6, and an industrial PC (IPC) 7. The sensor module 5 is coaxially installed in the scanning galvanometer system of the laser additive manufacturing equipment. The sensor module 5 is connected to the signal processor 6 via a signal line. The signal processor 6 is connected to the IPC 7 via a signal line. The signal processor 6 is connected to a control system 8 of the laser additive manufacturing equipment via a signal line.

In this embodiment, the laser generated by the laser device 1 is first transmitted through the beam splitter 4 to a sensor module for the laser emission signal in the sensor module 5. At the same time, the laser generated by the laser device 1 is also incident into a forming chamber 9 via the scanning galvanometer 3 and the field lens 2. The optical radiation generated during the laser additive manufacturing process is transmitted to the sensor module 5 via the field lens 2, the scanning galvanometer 3, and the beam splitter 4. The sensor module 5 can perform photoelectric conversion and can perform photoelectric conversion on optical radiation signals of multiple wavelengths into electrical signals, including visible light (400-700nm), laser reflection (1060-1070nm), laser emission (1060-1070nm), and infrared light (>1200nm). The electrical signals are transmitted to the signal processor 6 via a signal line. The signal processor 6 performs related processing on the electrical signals, including signal amplification and filtering. After signal processing, the signals are transmitted to the IPC 7 via a signal line. The IPC 7 extracts and processes corresponding characteristic values of the signals, and compares them with preset upper and lower thresholds and upper and lower ratio thresholds, thereby judging the manufacturing quality of each slice layer during the additive manufacturing process. The IPC 7 transmits the corresponding processing information to the control system 8 of the laser additive manufacturing equipment via the signal line and the signal processor 6, thereby adjusting and optimizing the process parameter(s) of additive manufacturing.

Optionally, the sensor module 5 includes at least one of a laser emission signal sensor, a laser reflection signal sensor, a visible light signal sensor, and an infrared light signal sensor.

The wavelength of the laser generated by the laser device 1 is between 1070-1070nm. The sensor module 5 can perform photoelectric conversion, specifically implemented by a silicon photoelectric sensor. The sensor module 5 can perform photoelectric conversion on light of multiple wavelengths, including visible light (400-700nm), laser reflection (1070-1070nm), and infrared light (>1200nm). The signal processor 6 processes the electrical signals, including signal amplification and filtering, to increase the signal amplitude and reduce signal noise. The IPC 7 can further filter the signal, and then determine whether there is an abnormal region in the slice layer of the part based on the collected electrical signals. If there is an abnormal region, the IPC 7 obtains position information of the abnormal region, and transmits the position information of the abnormal region or other information to the control system 8 of the laser additive manufacturing equipment via the signal line and the signal processor 6, so that the control system controls the laser device 1 or a laser processing head or other components controlling laser welding in the laser welding system to re-process the abnormal region.

In laser processing applications, the infrared radiation signal corresponds to an infrared radiation signal in the wavelength range of 1250 nm to 1700 nm. The visible light radiation signal corresponds to a visible light radiation signal in the range of 400 nm to 700 nm. The laser processing reflection signal corresponds to the processing laser reflection signal during actual laser processing, for example, processing laser wavelengths include 915 nm, 1064 nm, 1070 nm, etc. The wavelength of the processing laser is related to the wavelength of the actual laser used. In some usage environments, the suitable range of the infrared radiation signal can be extended beyond the range of 1250 nm to 1700 nm. In some usage environments, the visible light radiation signal can be extended beyond the range of 400 nm to 700 nm.

The solution of the present disclosure is specifically introduced below.

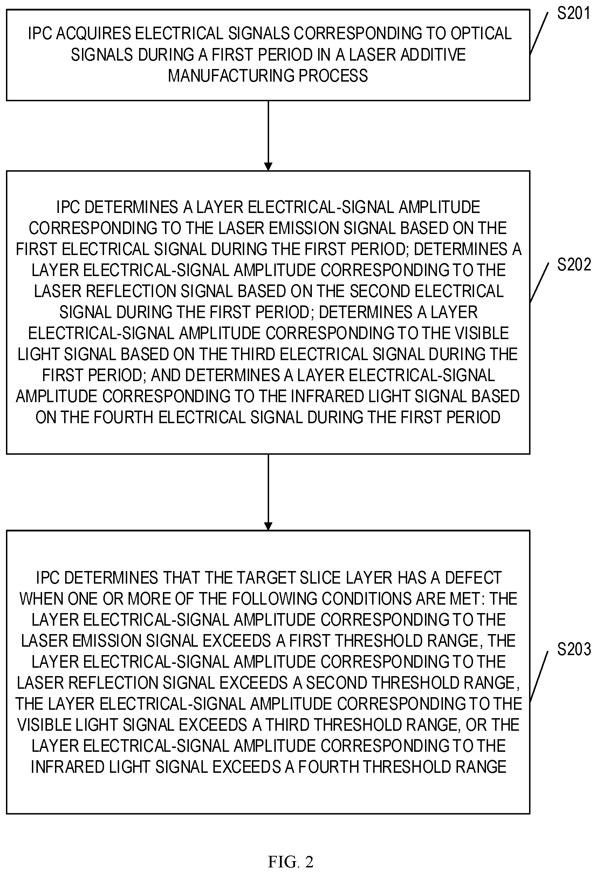

Referring to FIG. 2, FIG. 2 is a schematic flowchart of an additive manufacturing quality inspection method according to an embodiment of the present disclosure. As shown in FIG. 2, the method includes the following.

S201, an IPC acquires electrical signals corresponding to optical signals during a first period in a laser additive manufacturing process.

Herein, the first period is a period during which a target slice layer of a target part is processed in the laser additive manufacturing process. The optical signals include a laser emission signal from a laser device during the first period, and a laser reflection signal, a visible light signal, and an infrared light signal generated from the target slice layer during the first period. The electrical signals corresponding to the optical signals include one or more of: a first electrical signal corresponding to the laser emission signal, a second electrical signal corresponding to the laser reflection signal, a third electrical signal corresponding to the visible light signal, or a fourth electrical signal corresponding to the infrared light signal.

During the laser additive manufacturing process, the visible light radiated by the generated keyhole metal vapor, the infrared light radiated by the molten pool, the laser light reflected without being absorbed by the powder, and the laser emission signal are collected by the sensor module 5 and subjected to photoelectric conversion into electrical signals. Specifically, the laser emission signal sensor obtains a corresponding voltage value V0, the visible light signal sensor obtains a corresponding voltage value V1, the laser reflection signal sensor obtains a corresponding voltage value V2, and the infrared light signal sensor obtains a corresponding voltage value V3. Gain adjustment is performed on the voltage values V0, V1, V2, and V3 separately, resulting in adjusted output electrical signals. During the processing the of target slice layer of the target part, the first electrical signal corresponding to the laser emission signal, the second electrical signal corresponding to the laser reflection signal, the third electrical signal corresponding to the visible light signal, and the fourth electrical signal corresponding to the infrared light signal can be obtained according to the above-described method.

S202, the IPC determines a layer electrical-signal amplitude corresponding to the laser emission signal based on the first electrical signal during the first period; determines a layer electrical-signal amplitude corresponding to the laser reflection signal based on the second electrical signal during the first period; determines a layer electrical-signal amplitude corresponding to the visible light signal based on the third electrical signal during the first period; and determines a layer electrical-signal amplitude corresponding to the infrared light signal based on the fourth electrical signal during the first period.

It should be understood that the layer electrical-signal amplitude corresponding to the laser emission signal, the layer electrical-signal amplitude corresponding to the laser reflection signal, the layer electrical-signal amplitude corresponding to the visible light signal, or the layer electrical-signal amplitude corresponding to the infrared light signal is obtained according to the above-described method only when needed.

It should be pointed out that the layer electrical-signal amplitude mentioned herein is an average electrical-signal amplitude of a layer (or called average layer electrical-signal amplitude) or is determined by weighted summation of the electrical signal amplitudes of all points in the layer. It should be understood that during the process of one layer in additive processing, the photoelectric sensor collects the electrical signal amplitude corresponding to the optical signal for the additive processing point at a certain sampling frequency, and multiple electrical signal amplitudes corresponding to multiple additive processing points will be collected for each layer. The following description takes the layer electrical-signal amplitude being the average layer electrical-signal amplitude as an example.

It should be understood that the laser emission signal sensor collects the laser emission signal at a certain frequency. During the first period of processing the target slice layer, the laser emission signal sensor collects multiple first electrical signals, and the average value of the multiple first electrical signals is the average layer electrical-signal amplitude corresponding to the laser emission signal. Optionally, after collecting the multiple first electrical signals, gain adjustment is performed on the multiple first electrical signals to obtain adjusted multiple first electrical signals. The average value of the adjusted multiple first electrical signals is the average layer electrical-signal amplitude corresponding to the laser emission signal.

The laser reflection signal sensor collects the laser reflection signal at a certain frequency. During the first period of processing the target slice layer, the laser reflection signal sensor collects multiple second electrical signals, and the average value of the multiple second electrical signals is the average layer electrical-signal amplitude corresponding to the laser reflection signal. Optionally, after collecting the multiple second electrical signals, gain adjustment is performed on the multiple second electrical signals to obtain adjusted multiple second electrical signals. The average value of the adjusted multiple second electrical signals is the average layer electrical-signal amplitude corresponding to the laser emission signal.

The visible light signal sensor collects the visible light signal at a certain frequency. During the first period of processing the target slice layer, the visible light signal sensor collects multiple third electrical signals, and the average value of the multiple third electrical signals is the average layer electrical-signal amplitude corresponding to the visible light signal. Optionally, after collecting the multiple third electrical signals, gain adjustment is performed on the multiple third electrical signals to obtain adjusted multiple third electrical signals. The average value of the adjusted multiple third electrical signals is the average layer electrical-signal amplitude corresponding to the visible light signal.

The infrared light signal sensor collects the infrared light signal at a certain frequency. During the first period of processing the target slice layer, the infrared light signal sensor collects multiple fourth electrical signals, and the average value of the multiple fourth electrical signals is the average layer electrical-signal amplitude corresponding to the infrared light signal. Optionally, after collecting the multiple fourth electrical signals, gain adjustment is performed on the multiple fourth electrical signals to obtain adjusted multiple fourth electrical signals. The average value of the adjusted multiple fourth electrical signals is the average layer electrical-signal amplitude corresponding to the infrared light signal.

S203, the IPC determines that the target slice layer has a defect when one or more of the following conditions are met: the layer electrical-signal amplitude corresponding to the laser emission signal exceeds a first threshold range, the layer electrical-signal amplitude corresponding to the laser reflection signal exceeds a second threshold range, the layer electrical-signal amplitude corresponding to the visible light signal exceeds a third threshold range, or the layer electrical-signal amplitude corresponding to the infrared light signal exceeds a fourth threshold range.

Herein, the upper limit and the lower limit of the first threshold range are respectively the maximum value and the minimum value of the average layer electrical-signal amplitudes corresponding to the laser emission signal during the process of forming slice layers without defects under the same processing parameters. The upper limit and the lower limit of the second threshold range are respectively the maximum value and the minimum value of the average layer electrical-signal amplitudes corresponding to the laser emission signal during the process of forming slice layers without defects under the same processing parameters. The upper limit and the lower limit of the third threshold range are respectively the maximum value and the minimum value of the average layer electrical-signal amplitudes corresponding to the visible light signal during the process of forming slice layers without defects under the same processing parameters. The upper limit and the lower limit of the fourth threshold range are respectively the maximum value and the minimum value of the average layer electrical-signal amplitudes corresponding to the infrared light signal during the process of forming slice layers without defects under the same processing parameters.

In an example, the above-mentioned defect means that a slice layer has pores, unfused holes, cracks, warping, or the like.

Specifically, the IPC acquires multiple average layer electrical-signal amplitudes corresponding to multiple laser emission signals respectively corresponding to multiple reference slice layers, wherein the reference slice layers are slice layers without defects, and the processing parameters for processing the reference slice layers are the same as the processing parameters of the target slice layer. The IPC determines the first threshold range based on the multiple average layer electrical-signal amplitudes corresponding to the multiple laser emission signals, wherein the upper limit and the lower limit of the first threshold range are respectively the maximum value and the minimum value among the multiple average layer electrical-signal amplitudes corresponding to the multiple laser emission signals.

The IPC acquires multiple average layer electrical-signal amplitudes corresponding to multiple laser reflection signals respectively corresponding to multiple reference slice layers. The IPC determines the second threshold range based on the multiple average layer electrical-signal amplitudes corresponding to the multiple laser reflection signals, wherein the upper limit and the lower limit of the second threshold range are respectively the maximum value and the minimum value among the multiple average layer electrical-signal amplitudes corresponding to the multiple laser reflection signals.

The IPC acquires multiple average layer electrical-signal amplitudes corresponding to multiple visible light signals respectively corresponding to multiple reference slice layers. The IPC determines the third threshold range based on the multiple average layer electrical-signal amplitudes corresponding to the multiple visible light signals, wherein the upper limit and the lower limit of the third threshold range are respectively the maximum value and the minimum value among the multiple average layer electrical-signal amplitudes corresponding to the multiple visible light signals.

The IPC acquires multiple average layer electrical-signal amplitudes corresponding to multiple infrared light signals respectively corresponding to multiple reference slice layers. The IPC determines the fourth threshold range based on the multiple average layer electrical-signal amplitudes corresponding to the multiple infrared light signals, wherein the upper limit and the lower limit of the fourth threshold range are respectively the maximum value and the minimum value among the multiple average layer electrical-signal amplitudes corresponding to the multiple infrared light signals.

When the average layer electrical-signal amplitude corresponding to the laser emission signal exceeds the first threshold range, the average layer electrical-signal amplitude corresponding to the laser reflection signal exceeds the second threshold range, the average layer electrical-signal amplitude corresponding to the visible light signal exceeds the third threshold range, and the average layer electrical-signal amplitude corresponding to the infrared light signal exceeds the fourth threshold range, the IPC determines that the target slice layer has a defect.

In a possible implementation, when at least one of the following conditions are met: the average layer electrical-signal amplitude corresponding to the laser emission signal exceeds the first threshold range, the average layer electrical-signal amplitude corresponding to the laser reflection signal exceeds the second threshold range, the average layer electrical-signal amplitude corresponding to the visible light signal exceeds the third threshold range, or the average layer electrical-signal amplitude corresponding to the infrared light signal exceeds the fourth threshold range, the IPC determines that the target slice layer has a defect.

Upon determining that the target slice layer has a defect, the IPC determines position information of the abnormal region in the target slice layer in the following manner.

The IPC constructs a trajectory amplitude map corresponding to the target slice layer based on a target electrical signal during the first period, wherein the target electrical signal is any one of the first electrical signal during the first period, the second electrical signal during the first period, the third electrical signal during the first period, or the fourth electrical signal during the first period. The contour of the trajectory amplitude map corresponding to the target slice layer is identical to the contour of the target slice layer. The trajectory amplitude map corresponding to the target slice layer includes multiple trajectory amplitude lines, the multiple trajectory amplitude lines correspond to processing trajectories during processing of the target slice layer, and the amplitude represented by the trajectory amplitude line is the amplitude of the target electrical signal during the processing of the target slice layer.

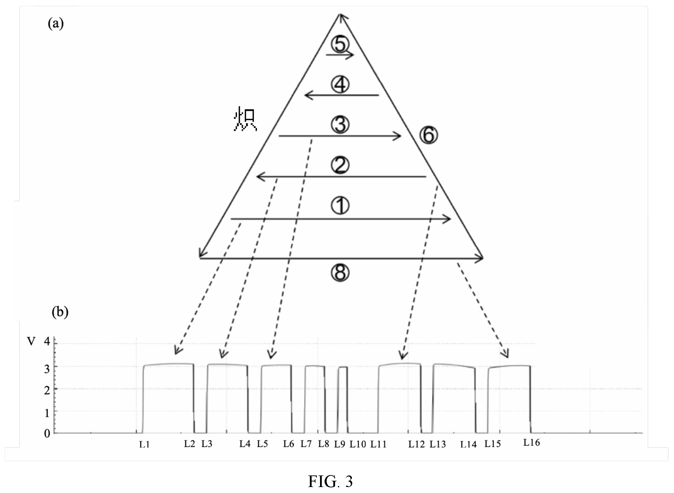

In the laser additive manufacturing process, pre-processing is performed on the model of the target part, i.e., slicing and layering the three-dimensional model of the target part in the Z-axis direction according to a preset slice layer thickness, thereby obtaining contour data of each layer section in the XY direction. Part (a) of FIG. 3 shows contour information of a certain slice layer of the target part model, wherein line segments ①-⑧ are the laser trajectories during the laser processing of this slice layer, and the arrows indicate the position where the laser stops emitting light in each laser trajectory. Part (b) of FIG. 3 shows an electrical signal variation diagram corresponding to each laser trajectory of this slice layer, obtained after the laser emission signal and the generated optical radiation signals (including laser reflection signal, visible light signal, and infrared light signal) during the laser additive manufacturing process are collected by the sensor module 5 and subjected to photoelectric conversion into electrical signals, and then subjected to corresponding signal processing by the signal processor 6.

As shown in part (b) of FIG. 3, the electrical signal amplitude interval L1-L2 corresponds to laser trajectory ①, the electrical signal amplitude interval L3-L4 corresponds to laser trajectory ②, the electrical signal amplitude interval L5-L6 corresponds to laser trajectory ③, the electrical signal amplitude interval L7-L8 corresponds to laser trajectory ④, the electrical signal amplitude interval L9-L10 corresponds to laser trajectory ⑤, the electrical signal amplitude interval L11-L12 corresponds to laser trajectory ⑥, the electrical signal amplitude interval L13-L14 corresponds to laser trajectory ⑦, and the electrical signal amplitude interval L15-L16 corresponds to laser trajectory ⑧.

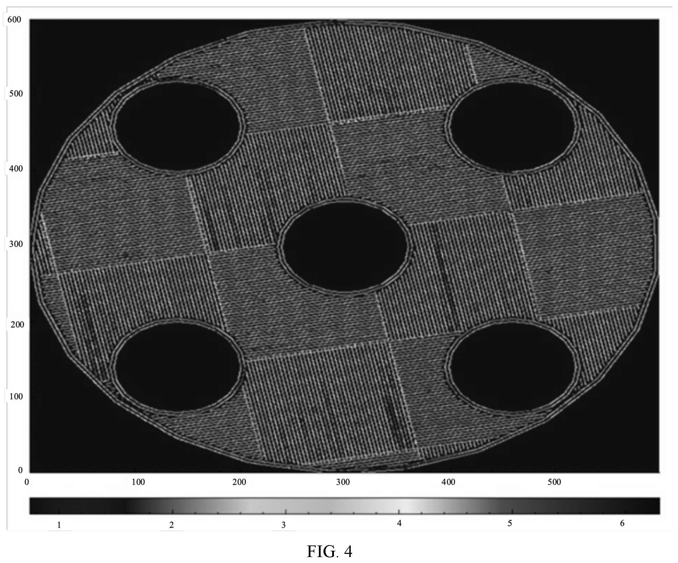

FIG. 4 illustrates a trajectory amplitude map. The trajectory amplitude map illustrated in FIG. 4 includes multiple trajectory amplitude lines, and the trajectory amplitude lines correspond to the processing trajectories for processing the target slice layer. The trajectory amplitude lines include multiple pixel points; and the pixel values of the pixel points are used to characterize the amplitude of the target electrical signal at corresponding moments during the processing of the target slice layer. Optionally, the IPC displays the trajectory amplitude map corresponding to the target slice layer. Inspection personnel can know the amplitude of the target electrical signal at corresponding moments through the pixel values of the pixel points in the trajectory amplitude map.

The IPC partitions the trajectory amplitude map corresponding to the target slice layer into multiple image blocks. Optionally, the IPC partitions the trajectory amplitude map into multiple image blocks according to a preset method. The IPC may also partition the trajectory amplitude map based on other rules.

It should be pointed out that, for each image block, its electrical signal amplitude is the average electrical-signal amplitude of the image block or is determined by weighted summation of the electrical signal amplitudes of all points in the image block. The following description takes the electrical signal amplitude corresponding to each image block being the average electrical-signal amplitude corresponding to the image block as an example.

Since the pixel values of the pixel points in the image block are used to characterize the amplitudes of the target electrical signal at corresponding moments during the processing of the target slice layer, the IPC can determine the average electrical-signal amplitude corresponding to each image block of the multiple image blocks, and obtain a first ratio for each image block based on the average electrical-signal amplitude corresponding to each image block and the average layer electrical-signal amplitude corresponding to the target electrical signal, wherein the first ratio for each image block is the ratio of the average electrical-signal amplitude corresponding to the image block to the average layer electrical-signal amplitude corresponding to the target electrical signal. The IPC determines an abnormal region in the target slice layer according to the first ratio for each image block, wherein the abnormal region in the target slice layer is a region corresponding to an image block, among the multiple image blocks, for which the first ratio exceeds a ratio threshold range corresponding to the target electrical signal. That is, the image block corresponding to the abnormal region in the target slice layer satisfies the following preset condition: the first ratio of the image block exceeds the ratio threshold range corresponding to the target electrical signal.

Herein, when the target electrical signal is the first electrical signal, the threshold range corresponding to the target electrical signal is the above-mentioned first threshold range; when the target electrical signal is the second electrical signal, the threshold range corresponding to the target electrical signal is the above-mentioned second threshold range; when the target electrical signal is the third electrical signal, the threshold range corresponding to the target electrical signal is the above-mentioned third threshold range; when the target electrical signal is the fourth electrical signal, the threshold range corresponding to the target electrical signal is the above-mentioned fourth threshold range.

It should be understood that image blocks correspond to regions of the target slice layer. Therefore, upon determining the image block that satisfies the above preset condition, the abnormal region in the target slice layer, i.e., the region that has a defect, can be determined based on the image block satisfying the above preset condition.

It should be pointed out here that the above-described process only determines one trajectory amplitude map based on one type of electrical signals among the first electrical signal during the first period, the second electrical signal during the first period, the third electrical signal during the first period, and the fourth electrical signal during the first period. The solution of the present disclosure can also be determining multiple trajectory amplitude maps respectively based on multiple types of electrical signals among the first electrical signal during the first period, the second electrical signal during the first period, the third electrical signal during the first period, and the fourth electrical signal during the first period. The IPC processes each of the multiple trajectory amplitude maps according to the above-described method, and can obtain the average electrical-signal amplitude corresponding to each image block in each trajectory amplitude map. Optionally, for multiple image blocks corresponding to the same region in the target slice layer in multiple trajectory amplitude maps, if at least one of the multiple image blocks satisfies the above-mentioned preset condition, the IPC determines the region corresponding to the multiple image blocks in the target slice layer as an abnormal region. Further, if all of the multiple image blocks satisfy the above-mentioned preset condition, the IPC determines the region corresponding to the multiple image blocks in the target slice layer as an abnormal region.

It should be understood that since the image blocks of the target slice layer are obtained by partitioning the trajectory amplitude map of the target slice layer according to a preset method, and the image blocks correspond to regions in the target slice layer, after determining the abnormal region of the target slice layer, the IPC determines the position information of the abnormal region in the target slice layer based on the preset method.

In a possible implementation, the IPC constructs multiple trajectory amplitude maps corresponding to the target electrical signals based on the target electrical signals respectively corresponding to multiple reference slice layers, wherein the multiple trajectory amplitude maps correspond to the multiple reference slice layers. For each among the multiple trajectory amplitude maps, processing is performed as follows.

Each trajectory amplitude map is partitioned according to a preset method to obtain multiple image blocks. The IPC obtains an average electrical-signal amplitude corresponding to the target electrical signal for each image block among the multiple image blocks, determines a second ratio for each image block based on the average electrical-signal amplitude corresponding to the target electrical signal for each image block and the corresponding average layer electrical-signal amplitude, wherein the second ratio for each image block is the ratio of the average electrical-signal amplitude corresponding to the target electrical signal for the image block to the corresponding average layer electrical-signal amplitude.

For the multiple trajectory amplitude maps, according to the above method, the IPC can obtain the second ratios for multiple image blocks (the multiple image blocks here include image blocks obtained by partitioning the multiple trajectory amplitude maps). The upper limit and the lower limit of the ratio threshold range corresponding to the target electrical signal are respectively the maximum value and the minimum value among the second ratios for the multiple image blocks.

It should be understood that the preset method used for partitioning the trajectory amplitude maps when determining the ratio threshold range, is the same as the preset method used for partitioning the trajectory amplitude map when determining whether the target slice layer has a defect.

In a possible implementation, when the IPC determines that there is an abnormal region in the target slice layer, the IPC obtains position information of the abnormal region in the target slice layer, and transmits the position information of the abnormal region to the laser processing system, so that the laser processing system re-processes the abnormal region in the target slice layer based on the position information of the abnormal region in the target slice layer, thereby eliminating the defect existing in the target slice layer.

In a feasible implementation, upon determining that there is an abnormal region in the target slice layer, the IPC obtains the average electrical-signal amplitude of the laser emission signal, the average electrical-signal amplitude of the laser reflection signal, the average electrical-signal amplitude of the visible light signal, and the average electrical-signal amplitude of the infrared light signal that are corresponding to the abnormal region of the target slice layer. The IPC compares the average electrical-signal amplitude of the laser emission signal, the average electrical-signal amplitude of the laser reflection signal, the average electrical-signal amplitude of the visible light signal, and the average electrical-signal amplitude of the infrared light signal corresponding to the abnormal region with corresponding preset thresholds respectively. Based on the comparison results, the IPC transmits instruction information to the control system of the additive manufacturing equipment to instruct the control system of the additive manufacturing equipment to adjust an output power of the laser device. If the comparison results show that the number of electrical signals higher than the corresponding preset threshold is greater than the number of electrical signals lower than the corresponding preset threshold, it indicates that the reason for the abnormal region in the target slice layer may be that the output power of the laser device is too high, then the instruction information instructs the control system of the additive manufacturing equipment to reduce the output power of the laser device; if the comparison results show that the number of electrical signals higher than the corresponding preset threshold is not greater than the number of electrical signals lower than the corresponding preset threshold, it indicates that the reason for the abnormal region in the target slice layer may be that the output power of the laser device is too low, then the instruction information instructs the control system of the additive manufacturing equipment to increase the output power of the laser device.

After completing the above-described adjustment, the IPC transmits the position information of the abnormal region to the control system of the additive manufacturing equipment, so that the control system of the additive manufacturing equipment controls the re-processing of the abnormal region according to the position information of the abnormal region and the instruction information, to achieve the purpose of eliminating the defect in the target slice layer. Moreover, processing subsequent slice layers based on the adjusted output power can avoid the occurrence of defects in subsequent slice layers.

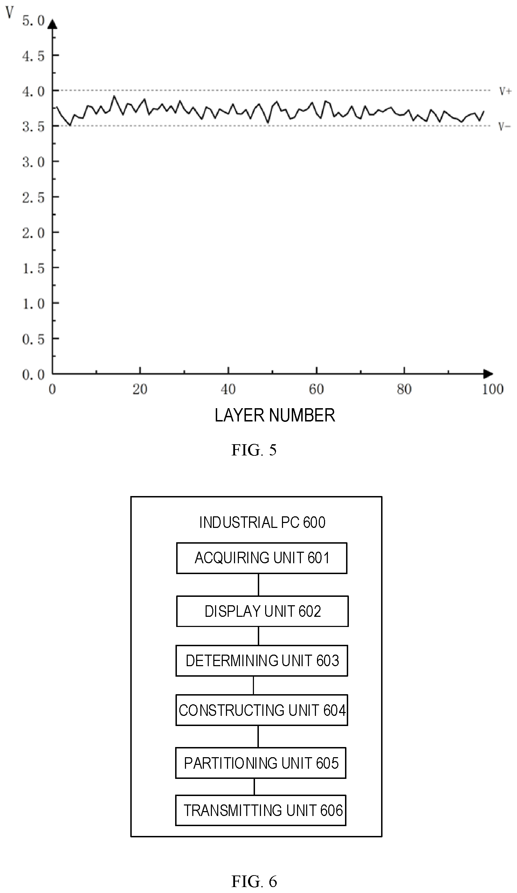

In a possible implementation, the IPC displays at least one of: a curve of the first electrical signal during the first period, a curve of the second electrical signal during the first period, a curve of the third electrical signal during the first period, or a curve of the fourth electrical signal during the first period, and the maximum and minimum values of the corresponding average layer electrical-signal amplitude. As shown in FIG. 5, V+ and V- are respectively the maximum value and the minimum value of the corresponding average layer electrical-signal amplitude. The IPC displays the result of whether the target slice layer has a defect.

FIG. 5 illustrates the relationship between layer number and electrical signal. That is, the electrical signals corresponding to the target optical signal during the processing of multiple slice layers are shown in one figure. Displaying the maximum and minimum values of the corresponding average layer electrical-signal amplitude while displaying the electrical signals allows the processing personnel to know whether there is an abnormal region in the processed slice layer.

In a possible implementation, the IPC displays the trajectory amplitude map corresponding to the target slice layer, and when it is determined that the target slice layer has a defect, the IPC displays the abnormal region in the target slice layer on the trajectory amplitude map corresponding to the target slice layer, so that the inspection personnel can know the position information of the abnormal region in the target slice layer.

It can be seen that in the solution of the present disclosure, during the process of processing the target slice layer of the target part, the electrical signal corresponding to the laser emission signal, the electrical signal corresponding to the laser reflection signal, the electrical signal corresponding to the visible light signal, and the electrical signal corresponding to the infrared light signal are acquired. Based on the acquired electrical signal corresponding to the laser emission signal, the electrical signal corresponding to the laser reflection signal, the electrical signal corresponding to the visible light signal, and the electrical signal corresponding to the infrared light signal, it is determined whether the target slice layer has a defect. The abnormal region in the slice layer of the part can be detected during additive processing, and compared to prior arts, this method does not damage the part and has low cost. When it is determined that the target slice layer has a defect, by partitioning the constructed trajectory amplitude map into blocks, and based on the average electrical-signal amplitude of the image blocks obtained from partitioning, the region with defect in the target slice layer, i.e., the abnormal region, can be determined. This method further determines the region where the defect exists in the target slice layer, facilitating subsequent re-processing of the defective region to eliminate the defect.

Referring to FIG. 6, an embodiment of the present disclosure provides a schematic structural diagram of an IPC. As shown in FIG. 6, the IPC 600 includes an acquiring unit 601, a display unit 602, and a determining unit 6036.

The acquiring unit 601 is configured to acquire electrical signals corresponding to optical signals during a first period in a laser additive manufacturing process, wherein the first period is a period during which a target slice layer of a target part is processed in the laser additive manufacturing process, and the optical signals include a laser emission signal from a laser device during the first period, and a laser reflection signal, a visible light signal, and an infrared light signal generated from the target slice layer during the first period. The electrical signals corresponding to the optical signals include one or more of: a first electrical signal corresponding to the laser emission signal, a second electrical signal corresponding to the laser reflection signal, a third electrical signal corresponding to the visible light signal, or a fourth electrical signal corresponding to the infrared light signal.

The display unit 602 is configured to display at least one of: a curve of the first electrical signal during the first period, a curve of the second electrical signal during the first period, a curve of the third electrical signal during the first period, or a curve of the fourth electrical signal during the first period.

The determining unit 603 is configured to, determine that the target slice layer has a defect when one or more of the following conditions are met: the average layer electrical-signal amplitude corresponding to the laser emission signal exceeds a first threshold range, the average layer electrical-signal amplitude corresponding to the laser reflection signal exceeds a second threshold range, the average layer electrical-signal amplitude corresponding to the visible light signal exceeds a third threshold range, and the average layer electrical-signal amplitude corresponding to the infrared light signal exceeds a fourth threshold range. The layer electrical-signal amplitude corresponding to the laser emission signal is determined based on the first electrical signal during the first period, the layer electrical-signal amplitude corresponding to the laser reflection signal is determined based on the second electrical signal during the first period, the layer electrical-signal amplitude corresponding to the visible light signal is determined based on the third electrical signal during the first period, and the layer electrical-signal amplitude corresponding to the infrared light signal is determined based on the fourth electrical signal during the first period.

In a possible implementation, the acquiring unit 601 is further configured to acquire multiple average layer electrical-signal amplitudes corresponding to multiple laser emission signals respectively corresponding to multiple reference slice layers. The reference slice layers are slice layers without defects, and processing parameters of the reference slice layers are the same as processing parameters of the target slice layer.

The determining unit 603 is further configured to determine a first threshold range based on the multiple average layer electrical-signal amplitudes corresponding to the multiple laser emission signals, wherein the upper limit and the lower limit of the first threshold range are respectively the maximum value and the minimum value among the multiple average layer electrical-signal amplitudes corresponding to the multiple laser emission signals.

In a possible implementation, the acquiring unit 601 is further configured to acquire multiple average layer electrical-signal amplitudes corresponding to multiple laser reflection signals respectively corresponding to multiple reference slice layers, wherein the reference slice layers are slice layers without defects, and processing parameters of the reference slice layers are the same as processing parameters of the target slice layer.

The determining unit 603 is further configured to determine a second threshold range based on the multiple average layer electrical-signal amplitudes corresponding to the multiple laser reflection signals, wherein the upper limit and the lower limit of the second threshold range are respectively the maximum value and the minimum value among the multiple average layer electrical-signal amplitudes corresponding to the multiple laser reflection signals.

In a possible implementation, the acquiring unit 601 is further configured to acquire multiple average layer electrical-signal amplitudes corresponding to multiple visible light signals respectively corresponding to multiple reference slice layers, wherein the reference slice layers are slice layers without defects, and processing parameters of the reference slice layers are the same as processing parameters of the target slice layer;

The determining unit 603 is further configured to determine a third threshold range based on the multiple average layer electrical-signal amplitudes corresponding to the multiple visible light signals, wherein the upper limit and the lower limit of the third threshold range are respectively the maximum value and the minimum value among the multiple average layer electrical-signal amplitudes corresponding to the multiple visible light signals.

In a possible implementation, the acquiring unit 601 is further configured to acquire multiple average layer electrical-signal amplitudes corresponding to multiple infrared light signals respectively corresponding to multiple reference slice layers, wherein the reference slice layers are slice layers without defects, and processing parameters of the reference slice layers are the same as processing parameters of the target slice layer.

The determining unit 603 is further configured to determine a fourth threshold range based on the multiple average layer electrical-signal amplitudes corresponding to the multiple infrared light signals, wherein the upper limit and the lower limit of the fourth threshold range are respectively the maximum value and the minimum value among the multiple average layer electrical-signal amplitudes corresponding to the multiple infrared light signals.

In combination with the first aspect, in a possible implementation, the IPC 600 further includes a constructing unit 604 and a partitioning unit 605.

The constructing unit 604 is configured to, when the determining unit 603 determines that the target slice layer has a defect, construct a trajectory amplitude map corresponding to the target slice layer based on a target electrical signal during the first period, wherein the trajectory amplitude map has a contour identical to the contour of the target slice layer, the trajectory amplitude map includes multiple trajectory amplitude lines, the multiple trajectory amplitude lines correspond to processing trajectories during processing of the target slice layer, and the amplitude represented by the trajectory amplitude line is the amplitude of the target electrical signal during the processing of the target slice layer.

The partitioning unit 605 is configured to partition the trajectory amplitude map into multiple image blocks.

The determining unit 603 is further configured to determine an average electrical-signal amplitude corresponding to each image block of the multiple image blocks; obtain a first ratio for each image block based on the electrical signal amplitude corresponding to each image block and the layer electrical-signal amplitude corresponding to the target electrical signal, wherein the first ratio for each image block is the ratio of the electrical signal amplitude corresponding to the image block to the average layer electrical-signal amplitude corresponding to the target electrical signal; determine an abnormal region in the target slice layer according to the first ratio for each image block.

The abnormal region in the target slice layer is a region corresponding to an image block, among the multiple image blocks, for which the first ratio exceeds a ratio threshold range corresponding to the target electrical signal. The target electrical signal is any one of the first electrical signal during the first period, the second electrical signal during the first period, the third electrical signal during the first period, or the fourth electrical signal during the first period.

In a possible implementation, the acquiring unit 601 is further configured to acquire position information of the abnormal region in the target slice layer,

The IPC 600 further includes a transmitting unit 606.

The transmitting unit 606 is configured to transmit the position information of the abnormal region in the target slice layer to a laser processing system, to enable the laser processing system to re-process the abnormal region in the target slice layer based on the position information of the abnormal region in the target slice layer.

In a possible implementation, the above-mentioned layer electrical-signal amplitude is an average layer electrical-signal amplitude, and the electrical signal amplitude corresponding to each image block is the electrical signal amplitude corresponding to the image block.

In a possible implementation, the above-mentioned layer electrical-signal amplitude is determined by weighted summation of the electrical signal amplitudes of all points in the layer, and the electrical signal amplitude corresponding to each image block is determined by weighted summation of the electrical signal amplitudes of all points in the image block.

In a possible implementation, the display unit 602 is further configured to display a result of whether the target slice layer has a defect.

In a possible implementation, the display unit 602 is further configured to display the trajectory amplitude map corresponding to the target slice layer; and display the abnormal region in the target slice layer on the trajectory amplitude map corresponding to the target slice layer.

It should be noted that each of the above units (acquiring unit 601, display unit 602, determining unit 603, constructing unit 604, partitioning unit 605, and transmitting unit 606) is configured to execute the relevant steps of the above method. For example, the acquiring unit 601 is configured to execute the relevant content of S201, the determining unit 603 is configured to execute the relevant content of S202, and the display unit 602, the determining unit 603, the constructing unit 604, the partitioning unit 605, and the transmitting unit 606 are configured to execute the relevant content of S203. Each unit or module in the IPC 600 can be respectively or entirely combined into one or several additional units or modules, or some (or certain) unit(s) or module(s) can be further split into multiple smaller functionally units or modules, which can achieve the same operation without affecting the achievement of the technical effects of the embodiments of the present disclosure. The above units or modules are divided based on logical functions. In practical applications, the function of one unit (or module) can also be implemented by multiple units (or modules), or the functions of multiple units (or modules) can be implemented by one unit (or module).

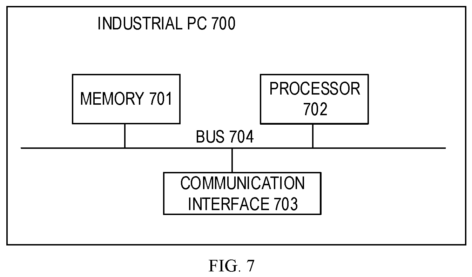

Based on the description of the above method embodiments and device embodiments, please refer to FIG. 7, which shows a schematic structural diagram of another IPC 700 according to an embodiment of the present disclosure. The IPC 700 shown in FIG. 7 (the IPC 700 may specifically be a computer device) includes a memory 701, a processor 702, a communication interface 703, and a bus 704. The memory 701, the processor 702, and the communication interface 703 are communicatively connected to each other via the bus 704.

The memory 701 may be a read-only memory (ROM), a static storage device, a dynamic storage device, or a random access memory (RAM).

The memory 701 may store a program. When the program stored in the memory 701 is executed by the processor 702, the processor 702 and the communication interface 703 are configured to execute the steps of the additive manufacturing quality inspection method according to the embodiments of the present disclosure.

The processor 702 may adopt a general-purpose central processing unit (CPU), a microprocessor, an application specific integrated circuit (ASIC), a graphics processing unit (GPU), or one or more integrated circuits, configured to execute relevant programs to implement the functions required to be performed by the units in the IPC 600 according to the embodiments of the present disclosure, or to execute the additive manufacturing quality inspection method according to the method embodiments of the present disclosure.

The processor 702 may also be an integrated circuit chip with signal processing capability. In the implementation process, the steps of the additive manufacturing quality inspection method of the present disclosure can be completed by hardware integrated logic circuits or instructions in the form of software in the processor 702. The above processor 702 may also be a general-purpose processor, a digital signal processor (DSP), an application specific integrated circuit (ASIC), a field programmable gate array (FPGA) or other programmable logic device, a discrete gate or transistor logic device, or a discrete hardware component. It can implement or execute the methods, steps, and logical block diagrams disclosed in the embodiments of the present disclosure. The general-purpose processor may be a microprocessor, or the processor may also be any conventional processor, etc. The steps of the method disclosed in conjunction with the embodiments of the present disclosure can be directly embodied as being executed by a hardware decoding processor, or executed by a combination of hardware and software modules in a decoding processor. The software module may be located in a mature storage medium in the art, such as random access memory, flash memory, read-only memory, programmable read-only memory, or electrically erasable programmable memory, registers, etc. The storage medium is located in the memory 701. The processor 702 reads information in the memory 701 and completes the functions required to be performed by the units included in the IPC 700 according to the embodiments of the present disclosure or executes the additive manufacturing quality inspection method according to the method embodiments of the present disclosure in combination with its hardware.

The communication interface 703 uses, for example but not limited to, a transceiver device such as a transceiver to implement communication between the IPC 700 and other devices or communication networks. For example, data can be acquired through the communication interface 703.

The bus 704 may include a path for transmitting information between various components of the IPC 700 (for example, the memory 701, the processor 702, and the communication interface 703).

It should be noted that although the IPC 700 shown in FIG. 7 only shows the memory, processor, and communication interface, in a specific implementation process, those skilled in the art should understand that the IPC 700 also includes other components necessary for normal operation. At the same time, according to specific needs, those skilled in the art should understand that the IPC 700 may also include hardware devices for implementing other additional functions. In addition, those skilled in the art should understand that the IPC 700 may also only include the devices necessary for implementing the embodiments of the present disclosure, and does not necessarily include all the devices shown in FIG. 7.

An embodiment of the present disclosure also provides a chip. The chip includes a processor and a data interface, wherein the processor reads instructions stored on a memory through the data interface to implement the additive manufacturing quality inspection method.

Optionally, as an implementation, the chip may further include a memory. The memory stores instructions, the processor is configured to execute the instructions stored on the memory, and when the instructions are executed, the processor is configured to execute the additive manufacturing quality inspection method.

An embodiment of the present disclosure further provides a computer-readable storage medium. The computer-readable storage medium stores instructions which, when run on a computer or processor, cause the computer or processor to execute one or more steps in any of the above methods.

An embodiment of the present disclosure further provides a computer program product containing instructions. When the computer program product runs on a computer or processor, the computer program product causes the computer or processor to execute one or more steps in any of the above methods.

Those skilled in the art can appreciate that the functions described in conjunction with various illustrative logical blocks, modules, and algorithm steps disclosed herein can be implemented in hardware, software, firmware, or any combination thereof. If implemented in software, the functions described in the various illustrative logical blocks, modules, and steps may be stored on or transmitted over as one or more instructions or code on a computer-readable medium and executed by a hardware-based processing unit. Computer-readable media may include computer-readable storage media, which correspond to tangible media such as data storage media, or communication media including any medium that facilitates transfer of a computer program from one place to another (e.g., based on a communication protocol). In this manner, computer-readable media may generally correspond to (1) non-transitory tangible computer-readable storage media or (2) communication media such as signals or carrier waves. Data storage media may be any available media that can be accessed by one or more computers or one or more processors to retrieve instructions, code, and/or data structures for implementing the techniques described in this disclosure. A computer program product may include a computer-readable medium.

By way of example and not limitation, such computer-readable storage media may include RAM, ROM, EEPROM, CD-ROM or other optical disk storage, magnetic disk storage or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. However, it should be understood that the computer-readable storage media and data storage media do not include connections, carrier waves, signals, or other transient media, but are actually directed to non-transitory tangible storage media. As used herein, magnetic disks and optical disks include compact disks (CD), laser disks, optical disks, digital versatile disks (DVD), and Blu-ray disks, wherein magnetic disks usually reproduce data magnetically, while optical disks reproduce data optically with lasers. Combinations of the above should also be included within the scope of computer-readable media.

Instructions may be executed by one or more processors, such as one or more digital signal processors (DSPs), general-purpose microprocessors, application specific integrated circuits (ASICs), field programmable logic arrays (FPGAs), or other equivalent integrated or discrete logic circuits. Accordingly, the term "processor" as used herein may refer to any of the foregoing structures or any other structure suitable for implementing the techniques described herein. Additionally, in some aspects, the functions described in the various illustrative logical blocks, modules, and steps herein may be provided within dedicated hardware and/or software modules configured for encoding and decoding, or incorporated in a combined codec. Moreover, the techniques may be fully implemented in one or more circuits or logic elements.

The techniques of this disclosure may be implemented in various apparatuses or devices, including wireless handsets, integrated circuits (ICs), or sets of ICs (e.g., chipsets). Various components, modules, or units are described in this disclosure to emphasize functional aspects of devices configured to perform the disclosed techniques, but do not necessarily require implementation by different hardware units. Rather, as described above, various units may be combined in a codec hardware unit in combination with appropriate software and/or firmware, or provided by interoperable hardware units (including one or more processors as described above).

Those skilled in the art can clearly understand that for the convenience and brevity of description, the specific working processes of the systems, devices, and units described above can refer to the specific descriptions of the corresponding steps in the foregoing method embodiments, and will not be repeated herein.

It should be understood that in the description of this disclosure, unless otherwise specified, "/" indicates an "or" relationship between the associated objects. For example, A/B may indicate A or B; wherein A and B may be singular or plural. Moreover, in the description of this application, unless otherwise specified, "multiple" means two or more. "At least one of the following" or similar expressions refer to any combination of these items, including any combination of single item (singular) or plural items (plural). For example, at least one of a, b, or c may represent: a, b, c, a-b, a-c, b-c, or a-b-c, wherein a, b, c may be single or multiple. In addition, to facilitate a clear description of the technical solutions of the embodiments of the present disclosure, in the embodiments of the present disclosure, words such as "first" and "second" are used to distinguish the same or similar items with substantially the same function and effect. Those skilled in the art can understand that words such as "first" and "second" do not limit the quantity and execution order, and words such as "first" and "second" do not necessarily limit them to being different. At the same time, in the embodiments of the present disclosure, words such as "exemplary" or "for example" are used to mean serving as an example, illustration, or explanation. Any embodiment or design scheme described as "exemplary" or "for example" in the embodiments of the present disclosure should not be construed as being more preferred or more advantageous than other embodiments or design schemes. Rather, the use of words such as "exemplary" or "for example" is intended to present related concepts in a concrete manner to facilitate understanding.

In the several embodiments provided in this disclosure, it should be understood that the disclosed systems, devices, and methods may be implemented in other ways. For example, the division of the units is only a logical function division, and there may be other division methods in actual implementation. For example, multiple units or components may be combined or integrated into another system, or some features may be ignored or not executed. The mutual coupling or direct coupling or communication connection shown or discussed may be through some interfaces, and the indirect coupling or communication connection of devices or units may be electrical, mechanical, or other forms.

The units described as separate components may or may not be physically separated, and the components displayed as units may or may not be physical units, that is, they may be located in one place or distributed on multiple network units. Some or all of the units may be selected according to actual needs to achieve the purpose of the solution of this embodiment.

In the above embodiments, they may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general-purpose computer, a special-purpose computer, a computer network, or other programmable device. The computer instructions may be stored in a computer-readable storage medium or transmitted through the computer-readable storage medium. The computer instructions may be transmitted from one website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer or a data storage device such as a server, data center, etc., that includes one or more available media integrated. The available medium may be a read-only memory (ROM), a random access memory (RAM), or a magnetic medium, such as a floppy disk, hard disk, magnetic tape, magnetic disk, or an optical medium, such as a digital versatile disc (DVD), or a semiconductor medium, such as a solid-state drive (SSD), etc.

The above is only the specific implementation of the embodiments of the present disclosure, but the protection scope of the embodiments of the present disclosure is not limited thereto. Any changes or substitutions within the technical scope disclosed in the embodiments of the present disclosure should be covered within the protection scope of the embodiments of the present disclosure. Therefore, the protection scope of the embodiments of the present disclosure should be based on the protection scope of the claims.

The apparatus embodiments described above are only illustrative, wherein the units and modules described as separate components may or may not be physically separated. In addition, some or all of the units and modules may be selected according to actual needs to achieve the purpose of the solution of this embodiment. Those of ordinary skill in the art can understand and implement it without creative effort.

The above is only a specific implementation of the present disclosure. It should be pointed out that for those of ordinary skill in the art, improvements and modifications can be made without departing from the principle of the present disclosure, and these improvements and modifications should also be regarded as the protection scope of the present disclosure.

## Claims

1. An additive manufacturing quality inspection method, comprising:
acquiring electrical signals corresponding to optical signals during a first period in a laser additive manufacturing process, wherein the first period is a period during which a target slice layer of a target part is processed in the laser additive manufacturing process, and the optical signals comprise a laser emission signal from a laser device during the first period, and a laser reflection signal, a visible light signal, and an infrared light signal generated from the target slice layer during the first period, the electrical signals corresponding to the optical signals comprise one or more of: a first electrical signal corresponding to the laser emission signal, a second electrical signal corresponding to the laser reflection signal, a third electrical signal corresponding to the visible light signal, and a fourth electrical signal corresponding to the infrared light signal; and
determining that the target slice layer has a defect when one or more of following conditions are met:
a layer electrical-signal amplitude corresponding to the laser emission signal exceeds a first threshold range;
a layer electrical-signal amplitude corresponding to the laser reflection signal exceeds a second threshold range;
a layer electrical-signal amplitude corresponding to the visible light signal exceeds a third threshold range; or
a layer electrical-signal amplitude corresponding to the infrared light signal exceeds a fourth threshold range,
wherein the layer electrical-signal amplitude corresponding to the laser emission signal is determined based on the first electrical signal during the first period, the layer electrical-signal amplitude corresponding to the laser reflection signal is determined based on the second electrical signal during the first period, the layer electrical-signal amplitude corresponding to the visible light signal is determined based on the third electrical signal during the first period, and the layer electrical-signal amplitude corresponding to the infrared light signal is determined based on the fourth electrical signal during the first period.

2. The method according to claim 1, further comprising:
acquiring a plurality of layer electrical-signal amplitudes corresponding to a plurality of laser emission signals, wherein the plurality of laser emission signals correspond to a plurality of reference slice layers respectively, the reference slice layers are slice layers without a defect, and processing parameters of the reference slice layers are the same as a processing parameter of the target slice layer; and
determining the first threshold range based on the plurality of layer electrical-signal amplitudes corresponding to the plurality of laser emission signals, wherein an upper limit and a lower limit of the first threshold range are respectively a maximum value and a minimum value among the plurality of layer electrical-signal amplitudes corresponding to the plurality of laser emission signals.

3. The method according to claim 1, further comprising:
acquiring a plurality of layer electrical-signal amplitudes corresponding to a plurality of laser reflection signals, wherein the plurality of laser reflection signals correspond to a plurality of reference slice layers respectively, the reference slice layers are slice layers without a defect, and processing parameters of the reference slice layers are the same as a processing parameter of the target slice layer; and
determining the second threshold range based on the plurality of layer electrical-signal amplitudes corresponding to the plurality of laser reflection signals, wherein an upper limit and a lower limit of the second threshold range are respectively a maximum value and a minimum value among the plurality of layer electrical-signal amplitudes corresponding to the plurality of laser reflection signals.

4. The method according to claim 1, further comprising:
acquiring a plurality of layer electrical-signal amplitudes corresponding to a plurality of visible light signals, wherein the plurality of visible light signals correspond to a plurality of reference slice layers respectively, the reference slice layers are slice layers without a defect, and processing parameters of the reference slice layers are the same as a processing parameter of the target slice layer; and
determining the third threshold range based on the plurality of layer electrical-signal amplitudes corresponding to the plurality of visible light signals, wherein an upper limit and a lower limit of the third threshold range are respectively a maximum value and a minimum value among the plurality of layer electrical-signal amplitudes corresponding to the plurality of visible light signals.

5. The method according to claim 1, further comprising:
acquiring a plurality of layer electrical-signal amplitudes corresponding to a plurality of infrared light signals, wherein the plurality of infrared light signals correspond to a plurality of reference slice layers respectively, the reference slice layers are slice layers without a defect, and processing parameters of the reference slice layers are the same as a processing parameter of the target slice layer; and
determining the fourth threshold range based on the plurality of layer electrical-signal amplitudes corresponding to the plurality of infrared light signals, wherein an upper limit and a lower limit of the fourth threshold range are respectively a maximum value and a minimum value among the plurality of layer electrical-signal amplitudes corresponding to the plurality of infrared light signals.

6. The method according to any one of claims 1-5, wherein based on a determination that the target slice layer has a defect, the method further comprises:
constructing a trajectory amplitude map corresponding to the target slice layer based on a target electrical signal during the first period, wherein the target electrical signal is any one of the first electrical signal during the first period, the second electrical signal during the first period, the third electrical signal during the first period, and the fourth electrical signal during the first period, a contour of the trajectory amplitude map is identical to a contour of the target slice layer, the trajectory amplitude map comprises a plurality of trajectory amplitude lines, the plurality of trajectory amplitude lines correspond to processing trajectories during processing of the target slice layer, and an amplitude represented by a trajectory amplitude line is an amplitude of the target electrical signal during the processing of the target slice layer;
partitioning the trajectory amplitude map into a plurality of image blocks;
determining an electrical signal amplitude corresponding to each image block of the plurality of image blocks;
obtaining a first ratio for each image block based on the electrical signal amplitude corresponding to each image block and the layer electrical-signal amplitude corresponding to the target electrical signal, wherein the first ratio for each image block is a ratio of the electrical signal amplitude corresponding to the image block to the layer electrical-signal amplitude corresponding to the target electrical signal; and
determining an abnormal region in the target slice layer according to the first ratio for each image block;
wherein the abnormal region in the target slice layer is a region corresponding to an image block, among the plurality of image blocks, for which the first ratio exceeds a ratio threshold range corresponding to the target electrical signal.

7. The method according to claim 6, further comprising:
acquiring position information of the abnormal region in the target slice layer; and
transmitting the position information of the abnormal region in the target slice layer to a laser processing system, to enable the laser processing system to re-process the abnormal region in the target slice layer based on the position information of the abnormal region in the target slice layer.

8. The method according to any one of claims 1-7, wherein
the layer electrical-signal amplitude is an average electrical-signal amplitude for a layer, and the electrical signal amplitude corresponding to each image block is an average electrical-signal amplitude corresponding to each image block; or
the layer electrical-signal amplitude is determined by weighted summation of electrical signal amplitudes of all points in a layer, and the electrical signal amplitude corresponding to each image block is determined by weighted summation of electrical signal amplitudes of all points in each image block.

9. The method according to any one of claims 1-5, further comprising:
displaying at least one of: a curve of the first electrical signal during the first period, a curve of the second electrical signal during the first period, a curve of the third electrical signal during the first period, and a curve of the fourth electrical signal during the first period; and
displaying a result of whether the target slice layer has a defect.

10. The method according to claim 6, further comprising:
displaying the trajectory amplitude map corresponding to the target slice layer; and
displaying the abnormal region in the target slice layer on the trajectory amplitude map corresponding to the target slice layer.

11. An industrial PC (IPC), comprising:
an acquiring unit configured to acquire electrical signals corresponding to optical signals during a first period in a laser additive manufacturing process, wherein the first period is a period during which a target slice layer of a target part is processed in the laser additive manufacturing process, and the optical signals comprise a laser emission signal from a laser device during the first period, and a laser reflection signal, a visible light signal, and an infrared light signal generated from the target slice layer during the first period, the electrical signals corresponding to the optical signals comprise one or more of: a first electrical signal corresponding to the laser emission signal, a second electrical signal corresponding to the laser reflection signal, a third electrical signal corresponding to the visible light signal, and a fourth electrical signal corresponding to the infrared light signal;
a display unit configured to display at least one of: a curve of the first electrical signal during the first period, a curve of the second electrical signal during the first period, a curve of the third electrical signal during the first period, and a curve of the fourth electrical signal during the first period; and
a determining unit configured to determine that the target slice layer has a defect when one or more of following conditions are met:
a layer electrical-signal amplitude corresponding to the laser emission signal exceeds a first threshold range;
a layer electrical-signal amplitude corresponding to the laser reflection signal exceeds a second threshold range;
a layer electrical-signal amplitude corresponding to the visible light signal exceeds a third threshold range; or
a layer electrical-signal amplitude corresponding to the infrared light signal exceeds a fourth threshold range,
wherein the layer electrical-signal amplitude corresponding to the laser emission signal is determined based on the first electrical signal during the first period, the layer electrical-signal amplitude corresponding to the laser reflection signal is determined based on the second electrical signal during the first period, the layer electrical-signal amplitude corresponding to the visible light signal is determined based on the third electrical signal during the first period, and the layer electrical-signal amplitude corresponding to the infrared light signal is determined based on the fourth electrical signal during the first period.

12. An industrial PC (IPC), comprising a processor, wherein the processor is coupled to a memory, the memory is configured to store a computer program, and the processor is configured to execute the computer program stored in the memory to cause the IPC to perform the method according to any one of claims 1-10.

13. A laser processing control system, comprising: a laser welding system, a sensor module, a signal processor, and an industrial PC (IPC), wherein the IPC is configured to perform the method according to any one of claims 1-10.

14. A computer-readable storage medium storing a computer program which, when executed by a processor, implements the method according to any one of claims 1-10.
